# EUROPÄISCHE PATENTSCHRIFT

(11) **EP 2 072 862 B1**
(45) Veröffentlichungstag und Bekanntmachung des Hinweises auf die Patenterteilung: **25.04.2012**
(21) Anmeldenummer: 08018278.5
(22) Anmeldetag: 18.10.2008
(51) Int. Cl.: F16H 57/04

(54) **Lagerung einer Ölpumpenwelle im Doppelkupplungsgetriebe**
Bearing for an oil pump shaft in a double clutch gearbox
Palier d'un arbre de pompe à huile dans un engrenage à double embrayage

(30) Priorität: 19.01.2008 DE 102008005235; 22.12.2007 DE 102007062363; 22.12.2007 DE 102007062349
(43) Veröffentlichungstag der Anmeldung: 24.06.2009
(73) Patentinhaber: Dr. Ing. h.c. F. Porsche AG, 70435 Stuttgart (DE)
(72) Erfinder: Niko, Michael, 71701 Schwieberdingen (DE)

(56) Entgegenhaltungen:
- EP-A1- 1 610 017
- DE-A1-102005 029 967
- JP-A- 2007 024 130
- US-A- 4 841 803
- US-A- 4 922 765
- US-A- 6 044 931
- US-A1- 2005 064 976

## Beschreibung

Die Erfindung betrifft eine Lagerung einer Pumpenwelle einer Ölpumpe im Gehäuse eines Doppelkupplungsgetriebes, wobei die Ölpumpe als Zahnradpumpe ausgebildet ist und innerhalb eines Pumpengehäuses einen Innenrotor und einen Außenrotor aufweist, sowie der Innenrotor mittels der Pumpenwelle antreibbar ist, die mittels eines Pumpenrades antreibbar ist, das außerhalb des Pumpengehäuses angeordnet ist.

Eine derartige Lagerung einer Ölpumpenwelle im Gehäuse eines Doppelkupplungsgetriebes ist aus der EP 0 702 171 A1 bekannt. Dort bilden die Pumpenwelle und das Pumpenrad separate Bauteile, die drehfest miteinander verbunden sind. Die Anordnung von Pumpenwelle und Pumpenrad ist im Bereich abgewandter Enden der Anordnung im Pumpengehäuse und im Getriebegehäuse gelagert. Im Bereich des einen Endes der Anordnung ist die Pumpenwelle über ein Festlager im Pumpengehäuse gelagert und im Bereich des anderen Endes der Anordnung das Pumpenrad im Getriebegehäuse mittels eines Loslagers gelagert. Die Drehachse des Pumpenrades ist im Abstand zur Drehachse der Kupplungen angeordnet. Das Pumpenrad ist mit Außenzähnen versehen und wird mittels einer Kette angetrieben, die ein Antriebsrad umschlingt, das konzentrisch zur Drehachse der Kupplungen angeordnet ist.

Nachteilig ist bei der bekannten Lagerung, dass die zweiteilige Anordnung aus Pumpenwelle und Pumpenrad endseitig gelagert ist, einerseits über das Pumpenrad, andererseits über die Pumpenwelle, ferner ist von Nachteil, dass aufgrund der zweiteiligen Ausbildung der Anordnung von Pumpenwelle und Pumpenrad ein nur unzureichender Rundlauf des Pumpenrades gewährleistet, mit der Folge einer nachteiligen Geräuschanregung und unerwünschten Systemdruckschwankungen.

In der EP 0 289 958 B1 ist eine Wasserpumpe beschrieben, bei der eine Pumpenwelle und eine von einem Riemen umschlungene Scheibe einstückig ausgebildet sind.

Aus der gattungsgemäβen US 6,044,931 A ist ein Doppelkupplungsgetriebe bekannt, bei dem eine Ölpumpe als Zahnradpumpe ausgebildet ist, wobei das Pumpenrad und die Pumpenwelle einteilig ausgebildet sind.

Aufgabe der vorliegenden Erfindung ist es, für ein Doppelkupplungsgetriebe eine Lagerung einer Ölpumpenwelle im Gehäuse des Doppelkupplungsgetriebes zu schaffen, die sich durch eine kompakte Bauweise und einen optimalen Rundlauf des Pumpenrades, somit eine geringe Geräuschanregung auszeichnet.

Gelöst wird die Aufgabe mit einem Doppelkupplungsgetriebe gemäß Patentanspruch 1.

Das Pumpenrad und die Pumpenwelle bilden erfindungsgemäß somit ein einziges Bauteil. Ungenauigkeiten, die zwangsläufig durch eine Montage und Toleranzen von unterschiedlichen Bauteilen bedingt sind, werden somit durch die Einstückigkeit vermieden bzw. minimiert. Die einstückige Anordnung von Pumpenrad und Pumpenwelle zeichnet sich demnach durch eine hohe Rundlaufgenauigkeit aus; Taumelbewegungen sind somit weitgehend eliminiert. Diese guten Rundlaufeigenschaften bedingen eine minimale Geräuschanregung.

Das Getriebegehäuse des Doppelkupplungsgetriebes weist erfindungsgemäß ein Doppelkupplungsgehäuse, in dessen Bereich die beiden Kupplungen angeordnet sind, und eine Platte auf, die mit dem Doppelkupplungsgehäuse verbunden ist. Diese Platte stellt erfindungsgemäß eine Zentrierplatte bzw. hydraulische Verteilerplatte des Getriebes dar. Die Zentrierplatte dient der zentrierten Lagerung der Doppelkupplung bezüglich deren Drehachse. Die hydraulische Verteilerplatte ist mit einer Vielzahl von Kanälen versehen, durch die Hydrauliköl unter Druck, somit Hydrauliköl, das von der Ölpumpe gefördert wird, verteilt wird, um dieses insbesondere den Kupplungen der Doppelkupplung und Schaltstangen zum Einlegen der Gänge sowie Gleitlagern des Getriebes zuzuführen.

Insbesondere ist vorgesehen, dass das Pumpenrad fliegend gelagert ist. Hierdurch ergibt sich eine kompakte Bauweise der Lagerung. Erfindungsgemäß ist die Pumpenwelle, benachbart dem Pumpenrad, im Pumpengehäuse und, dem Pumpenrad abgewandt, in einer Platte des Getriebegehäuses gelagert. Bezogen auf die einstückige Anordnung von Pumpenwelle und Pumpenrad erfolgt somit nur die Lagerung der Anordnung im Bereich der Pumpenwelle. Dies ist unter Herstellungsaspekt von besonderem Vorteil, weil Lagertoleranzen nur bezüglich der Pumpenwelle zu berücksichtigen sind.

Es wird als vorteilhaft angesehen, wenn das Pumpenrad als Stirnrad mit gerader oder schräger Außenverzahnung ausgebildet ist. Das Pumpenrad kämmt insbesondere mit einem konzentrisch zur Drehachse der Kupplungen angeordneten Stirnrad mit am äußeren Umfang angeordneter gerader oder schräger Verzahnung. Insbesondere die schräge Verzahnung ist unter dem Aspekt der weiteren Optimierung der Geräuschanregung von Vorteil.

Gemäß einer besonderen Ausführungsform der Erfindung ist vorgesehen, dass sich der Durchmesser der Pumpenwelle, ausgehend von dem pumpenradnahen Lager zu dem pumpenradabgewandten Ende der Pumpenwelle hin verjüngt. Diese Gestaltung vereinfacht die Montage der Pumpenwelle erheblich, weil sie von einer Seite, bei montierten Lagern, eingesteckt werden kann. Insbesondere ist das dem Pumpenrad benachbarte Lager ein Loslager und das dem Pumpenrad abgewandte Lager ein Festlager. Das Festlager ist vorzugsweise als Vierpunkt-Rillenkugellager ausgebildet.

Der Innenrotor weist insbesondere eine Innenverzahnung und die Pumpenwelle einen Abschnitt mit Außenverzahnung zum Antreiben des Innenrotors auf, wobei der Innendurchmesser der Innenverzahnung des Innenrotors kleiner ist als der Bohrungsdurchmesser des Pumpengehäuses. Beim Montieren der Anordnung von Pumpenrad und Pumpenwelle, somit Einstecken der Pumpenwelle in das Pumpengehäuse, gelangt die Pumpenwelle mit ihrer Außenverzahnung in Eingriff mit der Innenverzahnung des Innenrotors. Wegen der radialen Abmessungen dieser Teile, mit der Folge, dass der Innenrotor den lichten Querschnitt des Bohrungsdurchmessers des Pumpengehäuses durchsetzt, ergibt sich ein vergrößerter radialer Dichtspalt im Bereich des Innenrotors der Zahnradpumpe und damit ein verbesserter volumetrischer Wirkungsgrad.

Die Pumpenwelle ist insbesondere um eine Achse drehbar, die beabstandet zur Drehachse der Kupplungen des Doppelkupplungsgetriebes ist. Angetrieben wird das Pumpenrad insbesondere mittels eines konzentrisch zur Drehachse der Kupplungen angeordneten Stirnrades, mit am äußeren Umfang angeordneter gerader oder schräger Verzahnung, die in Eingriff mit dem Pumpenrad steht.

Durch das Zusammenwirken zweier Zahnräder lässt sich, im Unterschied zu einer Kette, das Geräuschverhalten wesentlich optimieren. Das Stirnrad, das mit dem Pumpenrad in Eingriff steht, ist insbesondere als ringförmiges Zahnrad ausgebildet, das über ein Gleitlager in der Platte, insbesondere in einem Vorsprung der Platte gelagert ist und mit einer Kupplungsnabe der Doppelkupplung drehmomentübertragend verbunden ist.

Die Ölpumpe ist insbesondere innerhalb des Getriebes angeordnet, wobei der innerhalb des Getriebes, benachbart der Doppelkupplung befindliche Raum der Unterbringung der Ölpumpe und deren Antriebs dient. Innerhalb dieses Raumes befindet sich Hydraulik- oder Getriebeöl, so dass eine zuverlässige Schmierung der Ölpumpe und deren Antriebs unmittelbar gewährleistet ist oder mit baulich geringem Aufwand sichergestellt werden kann.

Die Drehmomentübertragung von der Doppelkupplung auf das Stirnrad erfolgt insbesondere derart, dass am Stirnrad ein Mitnahmefinger vorgesehen ist, der in eine in der Doppelkupplung ausgebildete Mitnahmenut hineinragt oder an der Doppelkupplung ein Mitnahmefinger vorgesehen ist, der in eine am Stirnrad ausgebildete Mitnahmenut hineinragt. Durch diese Gestaltung sind das Stirnrad und die rotierende Doppelkupplung nicht fest miteinander verbunden, sondern quasi axial entkoppelt. Taumelbewegungen der Doppelkupplung, die nicht zu vermeiden sind, übertragen sich somit nicht auf das Stirnrad.

Weitere Merkmale der Erfindung ergeben sich aus den Unteransprüchen, der nachfolgenden Beschreibung der Zeichnung und der Zeichnung selbst.

Ein bevorzugtes Ausführungsbeispiel der Erfindung ist in der Beschreibung erläutert und der nachfolgenden Beschreibung näher beschrieben.

Es zeigt:
- Fig. 1: einen Längsschnitt durch ein Doppelkupplungsgetriebe, wobei in der Schnittdarstellung Schnittführungen in unterschiedlichen Schnittebenen wiedergegeben sind, so dass diese Darstellung der Erläuterungen des grundsätzlichen Aufbaus des Getriebes dient.
- Fig. 2: einen Schnitt durch das Doppelkupplungsgetriebe gemäß Fig. 1, aller- dings in vergrößerter Darstellung, nur für den Bereich der Ölpumpe und der mit dieser zusammenwirkenden Bauteile des Getriebes,
- Fig. 3: eine Schnittdarstellung gemäß Fig. 2, nur veranschaulicht für die Öl- pumpe und die der Lagerung der Ölpumpe dienende Platte.

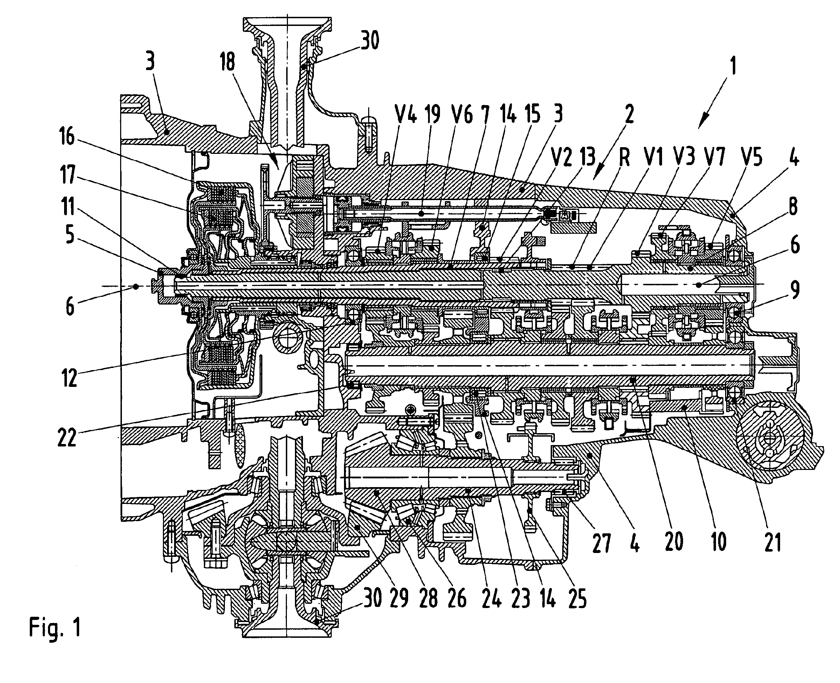

Zunächst wird bezüglich des grundsätzlichen Aufbaus des Doppelkupplungsgetriebes auf die Darstellung der Fig. 1 Bezug genommen:

Das Doppelkupplungsgetriebe 1 weist ein Getriebegehäuse 2 auf, das durch ein Doppelkupplungsgehäuse 3 und einen mit diesem verschraubten Gehäusehinterdeckel 4 gebildet ist.

Das Doppelkupplungsgetriebe 1 weist eine Kupplungsnabe 5 auf, die von einer Antriebswelle eines nicht dargestellten Fahrzeugmotors angetrieben wird. Mit der Drehachse 6 der Kupplungsnabe 5 fällt die Drehachse einer Hohlwelle 7 des Doppelkupplungsgetriebes 1 zusammen, in der eine gleichfalls um die Drehachse 6 drehbare Vollwelle 8 gelagert ist. Die Vollwelle 8 ist über ein Festlager 9 im Deckel 4 gelagert. Das dem Festlager 9 abgewandte Ende der Vollwelle 8 ist über ein Loslager 11 in der Kupplungsnabe 5 gelagert. Etwa auf der halben Länge der Hohlwelle 7 ist diese über ein Festlager 12 im Doppelkupplungsgehäuse 3 gelagert. Das der Kupplungsnabe 5 abgewandte Ende der Hohlwelle 7 ist über ein Loslager 13 in der Vollwelle 8 gelagert. Etwa auf der halben Länge der Vollwelle 8 ist die Anordnung von Hohlwelle 7 und diese durchsetzender Vollwelle 8 in einer mit dem Kupplungsgehäuse 3 verschraubten Lagerplatte 14 gelagert, und zwar über ein Loslager 15 zwischen Hohlwelle 7 und Lagerplatte 14.

Über eine erste Kupplung 16 lässt sich die Kupplungsnabe 5 kraftschlüssig mit der Vollwelle 8 verbinden, über eine zweite Kupplung 17 die Kupplungsnabe 5 kraftschlüssig mit der Hohlwelle 7 verbinden. Nach Betätigen der ersten Kupplung 16 und damit Antreiben der Vollwelle 8 steht die der Vollwelle 8 zugeordnete Gruppe von Getriebegängen, vorliegend die Vorwärtsgänge 1, 3, 5 und 7 sowie der Rückwärtsgang für den Antrieb zur Verfügung, bei Betätigen der zweiten Kupplung 17 und damit Antreiben der Hohlwelle 7 steht die dieser zugehörige Gruppe von Getriebegängen, konkret die Vorwärtsgänge 2, 4 und 6 für den Antrieb zur Verfügung. Die Umschaltung von einem Getriebegang der einen Ganggruppe auf einen Getriebegang der anderen Ganggruppe kann demzufolge ohne Zugkraftunterbrechung erfolgen.

Innerhalb des Doppelkupplungsgehäuses 3 ist eine Ölpumpe 18 angeordnet, die durch die Kupplungsnabe 5 ständig angetrieben wird. Mehrere axial angeordnete, somit parallel zur Längsachse von Hohlwelle 7 und Vollwelle 8 angeordnete, hydraulisch betätigbare Schaltstangen 19 dienen dem Schalten der einzelnen Gänge des Getriebes.

Über die mit der Hohlwelle 7 bzw. mit der Vollwelle 8 verbundenen Zahnräder - Zahnräder V4, V6 und V2 der Hohlwelle 7 bzw. Zahnräder R, V1, V3, V7 und V5 der Vollwelle 8 - wird das Drehmoment auf Zahnräder einer parallel zur Hohlwelle 7 und zur Vollwelle 8 gelagerten Vorgelegewelle 20 übertragen, die über ein Festlager 21 im Deckel 4 des Getriebegehäuses 2 und über ein Loslager 22 im Doppelkupplungsgehäuse 3 sowie ein Loslager 23 in der Lagerplatte 14 gelagert ist. Im Deckel 4 ist im Bereich der Gänge V5 und V7 eine Radsatzschale 10 gelagert, die zum Zwecke der Verminderung der Panschverluste die Vorgelegewelle 20 und die mit dieser verbundenen Zahnräder dieser Gangstufen wannenartig unten umschließet. Von der Vorgelegewelle 20 wird das Drehmoment mittels eines Zahnradpaares auf eine parallel zu dieser angeordnete Ritzelwelle 24 übertragen, mit der drehfest ein Parksperrenrad 25 verbunden ist. Die Ritzelwelle 24 ist in einem Festlager 26 im Kupplungsgehäuse 3 und über ein Loslager 27 im Deckel 4 gelagert. Über ein Bestandteil der Ritzelwelle 24 bildendes Zahnrad 28 wird das Drehmoment auf ein Zahnrad 29 in Art eines Querdifferentialgetriebes übertragen, wobei das Zahnrad 29 drehfest mit der Abtriebswelle 30 des Getriebes 1 verbunden ist.

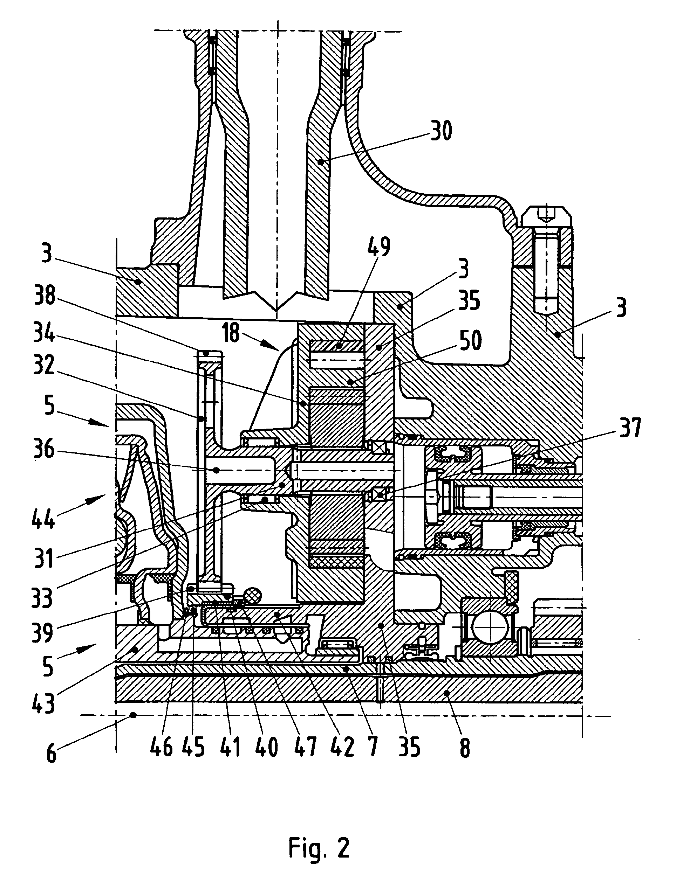

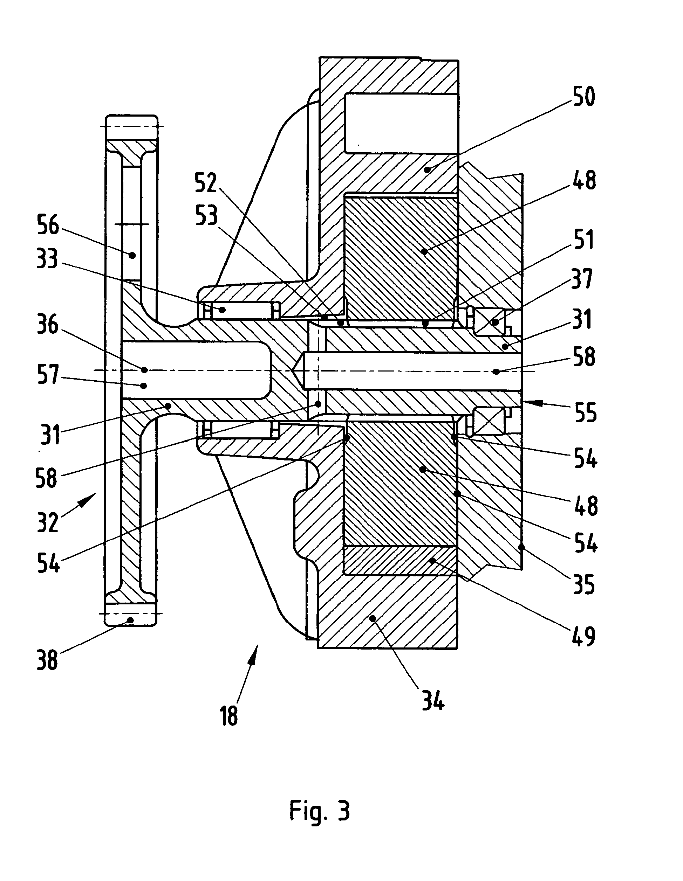

Die vorliegende Erfindung bezieht sich auf die besondere Anordnung der Ölpumpe 18 und deren Antriebs innerhalb des Getriebegehäuses 2 sowie die Lagerung der Pumpenwelle 31, wie es in den Fig. 2 und 3 näher veranschaulicht ist.

Die Pumpenwelle 31 und ein Pumpenrad 32 der Ölpumpe 18 bilden ein Bauteil. Die Lagerung des Pumpenrades 32 ist fliegend. Benachbart dem Pumpenrad 32 ist die Pumpenwelle 31 über ein Loslager 33, das als Nadelhülse ausgebildet ist, im Gehäuse 34 der Ölpumpe 18 gelagert. Dieses ist über nicht gezeigte Schrauben, die parallel zur Drehachse 36 der Pumpenwelle 31 angeordnet sind, mit einer Platte 35 verschraubt, die die Zentrierplatte bzw. hydraulische Verteilerplatte des Getriebes 1 darstellt. Diese Platte 35 ist über gleichfalls nicht gezeigte Schraubverbindungen, wobei die Schrauben gleichfalls parallel zur Drehachse 36 angeordnet sind, mit dem Doppelkupplungsgehäuse 3 verbunden.

Das dem Pumpenrad 3 abgewandte Ende der Pumpenwelle 31 ist über ein Festlager 37, das als Vierpunkt-Lager ausgebildet ist, in der Platte 35 gelagert. Das Pumpenrad 32 weist eine Außenverzahnung 38 auf, die als Schrägverzahnung ausgebildet ist. Die Außenzähne des Pumpenrades 32 stehen in Eingriff mit einer Außenverzahnung 39 eines als Hülse ausgebildeten Stirnrades 40, das über ein Gleitlager 41 in einem Ansatz 42 der Platte 35 gelagert ist. In der Platte 35 ist ferner die Kupplungsnabe 5 gelagert. Mittels der Brennkraftmaschine wird die Kupplungsnabe 5 ständig angetrieben, womit sich eine Bestandteil der Kupplungsnabe 5 bildende Nabenhülse 43, im Bereich derer die Kupplungsnabe in der Platte 35 gelagert ist, ständig entsprechend der Drehgeschwindigkeit der Abtriebswelle der Brennkraftmaschine dreht. Durch hydraulische Ansteuerung der jeweiligen Kupplung 16 bzw. 17 über nicht gezeigte Steuerelemente bei Förderung des Hydrauliköls von der Ölpumpe 18 durch die Zentrierplatte 35 /hydraulische Verteilerplatte werden Lamellenpakete der Kupplung 16 bzw. Kupplung 17 geschlossen und der Kraftschluss zur Vollwelle 8 bzw. zur Hohlwelle 7 hergestellt.

Der Kraftschluss zwischen der Kupplungsnabe 5 der Doppelkupplung 44 und dem Stirnrad 40 erfolgt über einen am Stirnrad 40 angebrachten Mitnahmefinger 45, der in eine in der Nabenhülse 43 ausgebildete Mitnahmenut 46 hineinragt. Durch eine Formgestaltung von Mitnahmefinger 45 und Mitnahmenut 46 wird bei Übertragung eines Drehmoments von der Kupplungsnabe 5 auf das Stirnrad 40 dieses mit einer Kraft von den beiden Kupplungen weg beaufschlagt, wobei den Stellweg des Stirnrades 40 von den Kupplungen weg eine im Ansatz 42 gelagerte Anschlagscheibe 47 begrenzt.

Wie der Detaildarstellung in Fig. 3 zu entnehmen ist, ist die Ölpumpe 18 als Zahnradpumpe ausgebildet. Sie weist innerhalb des Pumpengehäuses 34 einen Innenrotor 48 und einen Außenrotor 49 auf. Mit der Bezugsziffer 50 ist die Mondsichel der Zahnradpumpe bezeichnet. In herkömmlicher Art und Weise kämmen Außenzähne des Innenrotors 48 mit Innenzähnen des Außenrotors 49. Der Innenrotor 48 weist einen Innenverzahnung 51 und die Pumpenwelle 31 einen Abschnitt mit Außenverzahnung 52 zum Antreiben des Innenrotors 48 auf. Hierbei ist der Innendurchmesser der Innenverzahnung 51 des Innenrotors 48 kleiner als der Bohrungsdurchmesser des Pumpengehäuses 34, veranschaulicht durch die Kontur 53 der Bohrung. Hierdurch ergibt sich eine große radiale Länge des Dichtspalts 54 zwischen Innenrotor 48 und Pumpengehäuse 34 bzw. Platte 35, somit ein verbesserter volumentrischer Wirkungsgrad der Ölpumpe 18.

Der Durchmesser der Pumpenwelle 31 verjüngt sich, ausgehend von dem Loslager 33, zu dem dem Pumpenrad 32 abgewandten Ende 55 der Pumpenwelle 31. Diese Gestaltung ermöglicht eine Steckmontage der aus Pumpenrad 32 und Pumpenwelle 31 gebildeten Baueinheit mit dem vorlaufenden Ende 55, welches die Montage wesentlich vereinfacht. Aus Gründen der Verminderung des Gewichts der Anordnung von Pumpenwelle 31 und Pumpenrad 32 ist das Pumpenrad 32 mit Löchern 56 versehen und es weist das Pumpenrad 32 und die Pumpenwelle 31 eine zentrale Bohrung 57 auf. Zum Schmieren der Pumpenwelle 31 ist diese zusätzlich mit Kanälen 58 versehen.

Über den Saugraum der Zahnradpumpe wird Hydrauliköl aus einer nicht veranschaulichten Ölwanne des Getriebes angesaugt und vom Druckraum der Zahnradpumpe Hydrauliköl mit einem Druck von bis zu 20 bar in die nicht veranschaulichten Kanäle der Zentrierplatte 35 bzw. hydraulischen Verteilerplatte gedrückt. Von dort wird das Hydrauliköl zu den Schalt- und Schmierbereichen des Getriebes gefördert.

### Bezugszeichenliste

- 1: Doppelkupplungsgetriebe
- 2: Getriebegehäuse
- 3: Doppelkupplungsgehäuse
- 4: Gehäusehinterdeckel
- 5: Kupplungsnabe
- 6: Drehachse
- 7: Hohlwelle
- 8: Vollwelle
- 9: Festlager
- 10: Radsatzschale
- 11: Loslager
- 12: Festlager
- 13: Loslager
- 14: Lagerplatte
- 15: Loslager
- 16: Kupplung
- 17: Kupplung
- 18: Ölpumpe
- 19: Schaltstange
- 20: Vorgelegewelle
- 21: Festlager
- 22: Loslager
- 23: Loslager
- 24: Ritzelwelle
- 25: Parksperrenrad
- 26: Festlager
- 27: Loslager
- 28: Zahnrad
- 29: Zahnrad
- 30: Abtriebswelle
- 31: Pumpenwelle
- 32: Pumpenrad
- 33: Loslager
- 34: Pumpengehäuse
- 35: Platte
- 36: Drehachse
- 37: Festlager
- 38: Außenverzahnung
- 39: Außenverzahnung
- 40: Stirnrad
- 41: Gleitlager
- 42: Ansatz
- 43: Nabenhülse
- 44: Doppelkupplung
- 45: Mitnahmefinger
- 46: Mitnahmenut
- 47: Anschlagscheibe
- 48: Innenrotor
- 49: Außenrotor
- 50: Mondsichel
- 51: Innenverzahnung
- 52: Außenverzahnung
- 53: Kontur
- 54: Dichtspalt
- 55: Ende
- 56: Loch
- 57: Bohrung
- 58: Kanal

## Patentansprüche

1. Doppelkupplungsgetriebe (1) mit einem Getriebegehäuse (2) und einer Ölpumpe (18), wobei eine Pumpenwelle (31) der Ölpumpe (18) im Getriebegehäuse (2) gelagert ist, wobei die Ölpumpe (18) als Zahnradpumpe ausgebildet ist und innerhalb eines Pumpengehäuses (34) einen Innenrotor (48) und einen Außenrotor (49) aufweist, sowie der Innenrotor (48) mittels der Pumpenwelle (31) antreibbar ist, die mittels eines Pumpenrades (32) antreibbar ist, das außerhalb des Pumpengehäuses (34) angeordnet ist, wobei das Pumpenrad (32) und die Pumpenwelle (31) als einstückige Anordnung ausgebildet sind,
**dadurch gekennzeichnet, dass**
die Pumpenwelle (31) benachbart dem Pumpenrad (32) im Pumpengehäuse (34) und dem Pumpenrad (32) abgewandt in einer Platte (35) des Getriebegehäuses (2) gelagert ist, und
das Getriebegehäuse (2) ein Doppelkupplungsgehäuse (3) und die Platte (35) aufweist, die mit dem Doppelkupplungsgehäuse (3) verbunden ist, wobei die Platte (35) eine Zentrierplatte bzw. hydraulische Verteilerplatte des Getriebes (1) ist, wobei
die Zentrierplatte der zentrierten Lagerung der Doppelkupplung (44) bezüglich deren Drehachse und die hydraulische Verteilerplatte der Zuführung von Hydrauliköl der Doppelkupplung unter Druck (44) dient.

2. Doppelkupplungsgetriebe (1) nach Anspruch 1, **dadurch gekennzeichnet, dass** das Pumpenrad (32) als Stirnrad mit gerader oder schräger Außenverzahnung (38) ausgebildet ist.

3. Doppelkupplungsgetriebe (1) nach Anspruch 1, **dadurch gekennzeichnet, dass** das den Pumpenrad (32) benachbarte Lager (33) ein Loslager und das dem Pumpenrad (32) abgewandte Lager (37) ein Festlager ist.

4. Doppelkupplungsgetriebe (1) nach einem der Ansprüche 1 bis 3 , **dadurch gekennzeichnet, dass** das Pumpenrad (32) fliegend gelagert ist.

5. Doppelkupplungsgetriebe (1) nach einem der Ansprüche 1 bis 4, **dadurch gekennzeichnet, dass** sich der Durchmesser der Pumpenwelle (31), ausgehend von dem pumpenradnahen Lager (33) zum dem Pumpenrad (32) abgewandten Ende (55) der Pumpenwelle (31) hin verjüngt.

6. Doppelkupplungsgetriebe (1) nach einem der Ansprüche 1 bis 5, **dadurch gekennzeichnet, dass** der Innenrotor (48) eine Innenverzahnung (51) und die Pumpenwelle (31) einen Abschnitt mit Außenverzahnung (52) zum Antreiben des Innenrotors (48) aufweist, wobei der Innendurchmesser der Innenverzahnung (51) des Innenrotors (48) kleiner ist als der Bohrungsdurchmesser des Pumpengehäuses (34).

7. Doppelkupplungsgetriebe (1) nach einem der Ansprüche 1 bis 6, **dadurch gekennzeichnet, dass** die Pumpenwelle (31) um eine Achse (36) drehbar ist, die beabstandet zur Drehachse (6) der Kupplungen (16, 17) des Doppelkupplungsgetriebes (1) ist.

8. Doppelkupplungsgetriebe (1) nach Anspruch 7, **dadurch gekennzeichnet, dass** konzentrisch zur Drehachse (6) der Kupplungen (16, 17) ein Stirnrad (40) mit am äußeren Umfang angeordneter gerader oder schräger Verzahnung (39) angeordnet ist, das in Eingriff mit dem Pumpenrad (32) steht.

9. Doppelkupplungsgetriebe (1) nach Anspruch 8, **dadurch gekennzeichnet, dass** das Stirnrad (40) und eine Kupplungsnabe (5) der Doppelkupplung (44) drehmomentübertragend verbunden sind.

10. Doppelkupplungsgetriebe (1) nach einem der Ansprüche 3 bis 9, **dadurch gekennzeichnet, dass** die Ölpumpe (18) innerhalb des Doppelkupplungsgehäuses (3) angeordnet ist.

## Claims

1. Double clutch gearbox (1) having a gearbox housing (2) and an oil pump (18), wherein a pump shaft (31) of the oil pump (18) is mounted in the gearbox housing (2), wherein the oil pump (18) is designed as a gearwheel pump and has an inner rotor (48) and an outer rotor (49) within a pump housing (34), and the inner rotor (48) can be driven by means of the pump shaft (31) which can be driven by means of a pump wheel (32) which is arranged outside the pump housing (34), wherein the pump wheel (32) and the pump shaft (31) are formed as a single-piece arrangement, **characterized in that**
the pump shaft (31) is mounted, adjacent to the pump wheel (32), in the pump housing (34) and, remote from the pump wheel (32), in a plate (35) of the gearbox housing (2), and the gearbox housing (2) has a double clutch housing (3) and the plate (35) which is connected to the double clutch housing (3), wherein the plate (35) is a centring plate and hydraulic distributor plate of the gearbox (1), wherein
the centring plate serves for the centred mounting of the double clutch (44) with respect to the axis of rotation thereof, and the hydraulic distributor plate serves for the supply of hydraulic oil to the double clutch (44) under pressure.

2. Double clutch gearbox (1) according to Claim 1, **characterized in that** the pump wheel (32) is designed as a spur gear with a straight or helical external toothing (38).

3. Double clutch gearbox (1) according to Claim 1, **characterized in that** the bearing (33) which is adjacent to the pump wheel (32) is a floating bearing and the bearing (37) which is remote from the pump wheel (32) is a fixed bearing.

4. Double clutch gearbox (1) according to one of Claims 1 to 3, **characterized in that** the pump wheel (32) is mounted in an overhung configuration.

5. Double clutch gearbox (1) according to one of Claims 1 to 4, **characterized in that** the diameter of the pump shaft (31) tapers, proceeding from the bearing (33) close to the pump wheel, toward that end (55) of the pump shaft (31) which is remote from the pump wheel (32).

6. Double clutch gearbox (1) according to one of Claims 1 to 5, **characterized in that** the inner rotor (48) has an internal toothing (51) and the pump shaft (31) has a portion with an external toothing (52) for driving the inner rotor (48), wherein the inner diameter of the internal toothing (51) of the inner rotor (48) is smaller than the bore diameter of the pump housing (34).

7. Double clutch gearbox (1) according to one of Claims 1 to 6, **characterized in that** the pump shaft (31) is rotatable about an axis (36) which is spaced apart from the axis of rotation (6) of the clutches (16, 17) of the double clutch gearbox (1).

8. Double clutch gearbox (1) according to Claim 7, **characterized in that** a spur gear (40) with a straight or helical toothing (39) arranged on the outer circumference is arranged concentrically with respect to the axis of rotation (6) of the clutches (16, 17), which spur gear is in engagement with the pump wheel (32).

9. Double clutch gearbox (1) according to Claim 8, **characterized in that** the spur gear (40) and a clutch hub (5) of the double clutch (44) are connected in a torque-transmitting fashion.

10. Double clutch gearbox (1) according to one of Claims 3 to 9, **characterized in that** the oil pump (18) is arranged within the double clutch housing (3).

## Revendications

1. Boîte de vitesses à double embrayage (1) avec un carter de boîte de vitesses (2) et une pompe à huile (18), dans laquelle un arbre de pompe (31) de la pompe à huile (18) est supporté dans le carter de boîte de vitesses (2), dans laquelle la pompe à huile (18) est réalisée sous la forme d'une pompe à engrenages et présente, à l'intérieur d'un carter de pompe (34), un rotor intérieur (48) et un rotor extérieur (49), et le rotor intérieur (48) peut être entraîné au moyen de l'arbre de pompe (31), qui peut être entraîné au moyen d'une roue de pompe (32) qui est disposée à l'extérieur du carter de pompe (34), dans laquelle la roue de pompe (32) et l'arbre de pompe (31) sont réalisés sous la forme d'un dispositif d'une seule pièce, **caractérisée en ce que** l'arbre de pompe (31) est supporté à proximité de la roue de pompe (32) dans le carter de pompe (34) et à l'opposé de la roue de pompe (32) dans une plaque (35) du carter de boîte de vitesses (2), et le carter de boîte de vitesses (2) présente un carter de double embrayage (3) et la plaque (35), qui est assemblée au carter de double embrayage (3), dans laquelle la plaque (35) est une plaque de centrage ou une plaque de distributeur hydraulique de la boîte de vitesses (1), dans laquelle la plaque de centrage est destinée au support centré du double embrayage (44) par rapport à son axe de rotation et la plaque de distributeur hydraulique est destinée à la fourniture d'huile hydraulique au double embrayage sous pression (44).

2. Boîte de vitesses à double embrayage (1) selon la revendication 1, **caractérisée en ce que** la roue de pompe (32) est réalisée sous la forme d'une roue droite avec une denture extérieure droite ou oblique (38).

3. Boîte de vitesses à double embrayage (1) selon la revendication 1, **caractérisée en ce que** le palier (33) proche de la roue de pompe (32) est un palier libre et le palier (37) éloigné de la roue de pompe (32) est un palier fixe.

4. Boîte de vitesses à double embrayage (1) selon l'une quelconque des revendications 1 à 3, **caractérisée en ce que** la roue de pompe (32) est supportée de façon flottante.

5. Boîte de vitesses à double embrayage (1) selon l'une quelconque des revendications 1 à 4, **caractérisée en ce que** le diamètre de l'arbre de pompe (31) diminue à partir du palier (33) proche de la roue de pompe en direction de l'extrémité (55) de l'arbre de pompe (31) éloignée de la roue de pompe (32).

6. Boîte de vitesses à double embrayage (1) selon l'une quelconque des revendications 1 à 5, **caractérisée en ce que** le rotor intérieur (48) présente une denture intérieure (51) et l'arbre de pompe (31) présente une section avec une denture extérieure (52) pour entraîner le rotor intérieur (48), dans laquelle le diamètre intérieur de la denture intérieure (51) du rotor intérieur (48) est plus petit que le diamètre de l'alésage du carter de pompe (34).

7. Boîte de vitesses à double embrayage (1) selon l'une quelconque des revendications 1 à 6, **caractérisée en ce que** l'arbre de pompe (31) est apte à tourner autour d'un axe (36), qui est espacé de l'axe de rotation (6) des embrayages (16, 17) de la boîte de vitesses à double embrayage (1).

8. Boîte de vitesses à double embrayage (1) selon la revendication 7, **caractérisée en ce qu'**une roue droite (40) avec une denture droite ou oblique (39) disposée sur son pourtour extérieur, qui est en prise avec la roue de pompe (32), est disposée de façon concentrique à l'axe de rotation (6) des embrayages (16, 17).

9. Boîte de vitesses à double embrayage (1) selon la revendication 8, **caractérisée en ce que** la roue droite (40) et un moyeu d'embrayage (5) du double embrayage (44) sont reliés en transmettant un couple de rotation.

10. Boîte de vitesses à double embrayage (1) selon l'une quelconque des revendications 3 à 9, **caractérisée en ce que** la pompe à huile (18) est disposée à l'intérieur du carter de double embrayage (3).
